## Europäisches Patentamt

## European Patent Office

## Office européen des brevets

(19)

(11) Veröffentlichungsnummer: **0 250 002**
**B1**

(12) **EUROPÄISCHE PATENTSCHRIFT**

(45) Veröffentlichungstag der Patentschrift: **29.08.90**

(51) Int. Cl.⁵: **F 16 L 59/02**

(21) Anmeldenummer: **87108899.3**

(22) Anmeldetag: **22.06.87**

(54) **Schaumstoffisolierrohr aus flexiblem Schaumkunststoff mit einem den Rohrmantel in Richtung der Rohrlängsachse zu öffnenden Verschlusssystem sowie ein Verfahren zur Herstellung eines solchen Verschlusssystems.**

(30) Priorität: **20.06.86 DE 3620791**

(43) Veröffentlichungstag der Anmeldung:
**23.12.87 Patentblatt 87/52**

(45) Bekanntmachung des Hinweises auf die
Patenterteilung:
**29.08.90 Patentblatt 90/35**

(84) Benannte Vertragsstaaten:
**AT BE CH ES FR GB IT LI NL**

(56) Entgegenhaltungen:
**EP-A-0 061 352**
**EP-A-0 117 388**
**DE-A-2 411 610**
**DE-A-3 332 149**
**DE-U-1 969 408**
**GB-A-2 146 093**

**PATENT ABSTRACTS OF JAPAN, Band 1, Nr.**
**154 (M-77), 9. Dezember 1977, Seite 5583 M 77;**
**& JP - A - 52 98217 (SUMITOMO DENKI)**
**17-08-1977 (Kat. A)**

(73) Patentinhaber: **NoeL, MARQUET & CIE société anonyme:**
**rue Haute 104**
**B-4700 Eupen (BE)**

(72) Erfinder: **Hirzel, Charles**
**Avenue Jules Destrée**
**B-4801 Stembert (BE)**

(74) Vertreter: **Steffens, Joachim, Dr.**
**Steubstrasse 10**
**D-8032 München-Gräfelfing (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 250 002 B1

**Beschreibung**

Die vorliegende Erfindung betrifft Schaumstoffisolierrohre aus flexiblen Schaumkunststoff mit einem in Richtung der Rohrlängsachse zu öffnenden ineinander greifenden Verschlußsystem.

Heizungs- bzw. Kühlsysteme werden zur Zeit durch die verschiedenartigsten, über die Rohre bzw. die Kanäle zu stülpenden bzw. zu ziehenden Isolierrohre gegen Wärme- bzw. Kälteverlust isoliert. In letzter Zeit werden immer stärker solche Isolierrohre bevorzugt, die aus den verschiedensten Kunststoffen, z.B. auf Basis von Kautschuk, Synthesekautschuk, elastischen bzw. flexiblen Polyethylenen oder anderen Kunststoffen bestehen. Rohrisolierungen werden zu diesem Zweck entweder als Halbschalen, als Rundumschalen oder in Form von Schaumstoffisolierrohren, die in Längsachse aufgeschlitzt sind, hergestellt. Da die Isolation der Rohre sehr häufig durch Überstülpen der aufgeschlitzten Schaumstoffrohre über die zu isolierenden Rohre geschieht, muß der offene Längsschlitz nach Überstülpen bzw. Anbringen der Isolierrohre geschlossen werden, um einerseits einen sicheren Halt auf dem zu isolierenden Rohr und andererseits eine einwandfreie Isolation auch im Bereich des Längsschlitzes zu gewährleisten. Ferner muß vermieden werden, daß durch den Längsschlitz des Isolierrohres Feuchtigkeit an das zu isolierende System vordringen kann.

Die Schließung der Schlitze geschieht heute in der praxis im allgemeinen so, daß entweder die Isolierschicht mit geeigneten Materialien umwickelt oder ein Selbstklebeband aus geeignetem Material über den Schlitz geklebt wird. Dies muß sowohl über den in Längsrichtung verlaufenden Schlitz als auch an den Stoßstellen der einzelnen Isolierrohrstücke gemacht werden. Häufig erfolgt auch die Schließung dieser Schlitze, indem man bei der Verlegung die Flächen der Stoßstellen mit einem geeigneten Leim oder Kleber bestreicht und sie dann von Hand zusammendrückt bis die Leimung bzw. Klebung hält. Es gibt ebenfalls Isolierrohre, die mit einem Kunststoff-Folienmantel umhüllt sind, der entweder gemäß dem deutschen Gebrauchsmuster (DE-U-1 969 408) mit einem in Rohrlängsachse verlaufenden Rillenverschluß oder gemäß der deutschen Offenlegungsschrift (DE-A-24 11 610) mit einem in Rohrlängsachse verlaufenden echten Reißverschluß versehen ist. Derartige Verschlußsysteme haben sich jedoch in der Praxis nicht durchsetzen können. Aus Pat. Abstr. of JP, Bd. 1, Nr. 154 (M-77) ist ferner eine Kunststoff-Folie bekannt, die um ein Rohr gelegt wird und deren Stoßkanten zwecks Verbindung miteinander Vorsprünge und entsprechende Ausnehmungen aufweisen die allerdings so ausgebildet sind, daß sie nur von oben, d.h. senkrecht zur Rohrlängsachse, ineinandergesteckt werden können, d.h. ein reißverschlußartiges Ineinanderstecken ist damit nicht möglich.

Die heute in der Praxis für Schaumstoffisolierrohre üblichen Verschlußsysteme sind demzufolge noch nicht optimal und weisen insbesondere folgende wesentliche Nachteile auf:

(a) Es ist nicht sichergestellt, daß die Verleger immer sorgfältig arbeiten. Deshalb geschieht es relativ häufig daß flächige Verklebungen der Stoßstellen im Schlitz nicht vollständig sind und offene Stellen verbleiben.

(b) Bei dem Verschluß durch Klebefolien geschieht es immer wieder, daß die Stoßstellen der Rohrschlitzungen nicht vollkommen vorher angedrückt sind und sogenannte Luftbrücken entstehen.

(c) Die Verlegung mittels dieser bekannten Verschlußsysteme ist kostspielig, da die Verlegung realtiv langsam fortschreitet.

(d) Die Umwicklung der Isolierrohre nach Verlegung mit geeigneten Metall- oder Kunststoff-Folien ist zwar wirksam, aber außerordentlich zeit- und kostenaufwendig.

Um diese Nachteile bei flexiblen Schaumstoffisolierrohren zu beseitigen, ist bereits in der DE-A-33 32 149 vorgeschlagen worden, die Rohrschlitzung nach dem Prinzip Nut und Feder zu gestalten, wobei die Feder aus einem starreren bzw. steiferen Material als das die Nut bildende Material besteht, oder wenn die Feder aus dem gleichen Material wie der Isolierkunststoff besteht, dieser verstärkt bzw. versteift ist. Außerdem ist in dieser Offenlegungsschrift auch noch eine Ausführungsform beschrieben, bei der anstelle der "Ineinandergreifschlitzung" gemäß dem Nut- und Feder-System die beiden sich gegenüberliegenden Schlitzhälften in Richtung der Längsachse übereinandergreifen. Bei dieser "Übergreifschlitzung" bestehen beide Schlitzhälften aus dem gleichen weichelastischen Schaumkunststoff. Nachteilig bei dieser "Übergreifschlitzung" ist jedoch die Tatsache, daß man sie erst ab einer gewissen Wandstärke des Schaumstoffisolierrohres vorsehen kann.

Aufgabe der vorliegenden Erfindung ist es daher, ein Verschlußsystem zur Verfügung zu stellen, das auch bei dünnwandigen Schaumstoffisolierrohren Anwendung finden kann und das gleichzeitig dazu beiträgt, den Rohrmantel des Isolierrohres nach Überstülpen über das zu isolierende Rohr so zu verschließen, daß es sich nicht mehr von alleine öffnen kann.

Gelöst wird diese Aufgabe gemäß der vorliegenden Erfindung dadurch, daß das Verschlußsystem ein reißverschlußähnlicher Zahnverschluß ist, der vorzugsweise mittels eines Laserstrahls in den Rohrmantel geschnitten ist.

Die bei dem reißverschlußähnlichen Zahnverschluß ineinandergreifenden Zähne weisen vorzugsweise abgerundete oder eckige Hinterschneidungen auf.

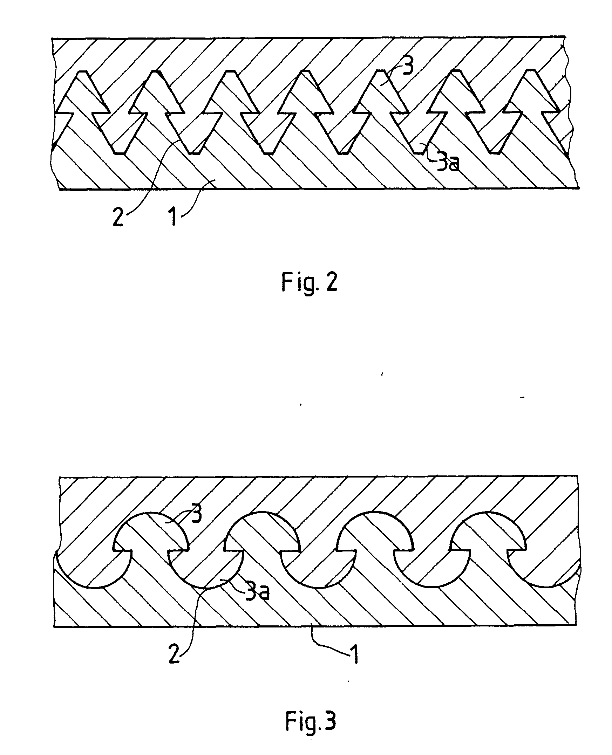

Die Erfindung wird nachfolgend anhand der Fig. 1 bis 3 erläutert. Alle aus den Zeichnungen ersichtlichen und nicht extra beschriebenen Details gehören mit zur Offenbarung der vorliegenden Erfindung.

Fig. 1 zeigt in vergrößerter Darstellung eine Draufsicht auf die Rohraußenwandung 1 eines flexiblen Schaumstoffisolierrohres mit dem in

den Rohrmantel eingeschnittenen reißverschlußähnlichen Zahnverschluß 2 mit den ineinandergreifenden Zähnen 3, 3a, die abgerundete Hinterschneidungen aufweisen.

Fig. 2 und 3 zeigen weitere beispielhafte Ausgestaltungen der Zähne 3, 3a des erfindungsgemäßen reißverschlußähnlichen Zahnverschlusses 2 mit eckigen Hinterschneidungen.

Der erfindungsgemäße reißverschlußähnliche Zahnverschluß wird vorzugsweise mittels eines Laserstrahls in den Rohrmantel bei der kontinuierlichen Extrusion der Schaumstoffisolierrohre in den Schaumstoffisoliermantel kontinuierlich eingeschnitten. Selbstverständlich kann man aber auch auf bestimmte Längen zugeschnittene Schaumstoffisolierrohre diskontinuierlich mit dem Laserstrahl einschneiden, beispielsweise indem man die Laserstrahlvorrichtung mittels eines Schlittens über das aufzuschlitzende Schaumstoffisolierrohr führt.

Anstelle der Laserstrahlschlitzung kann man den erfindungsgemäßen reißverschlußähnlichen Zahnverschluß selbstverständlich aber auch durch Stanzen erzeugen.

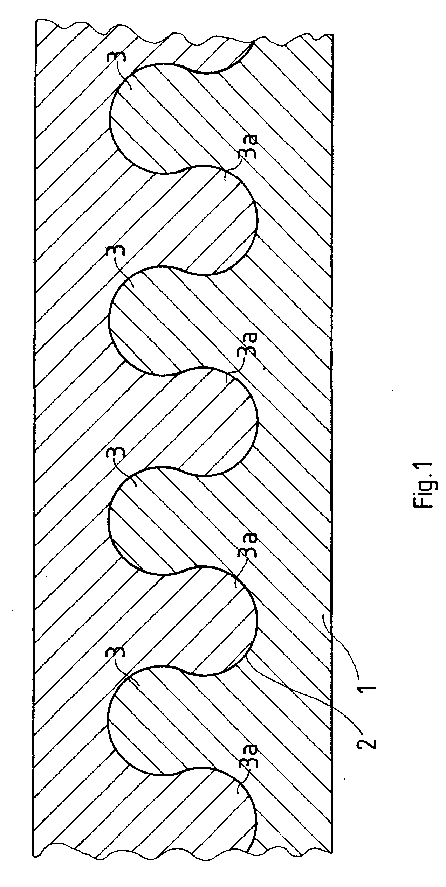

Durch die erfindungsgemäß bevorzugten Ausführungsformen der Zähne, insbesondere der Ausführungsform gemäß Fig. 1 und durch das den extrudierten flexiblen Schaumstoffisolierrohren innewohnende Rückstellvermögen kommt es nach Öffnung und Schließung des Zahnverschlusses zu einem engen, spaltlosen Aneinanderliegen der nebeneinander liegenden Zahnflächen, wodurch Luftbrücken zwischen den Zähnen vermieden werden.

Selbstverständlich kann man den erfindungsgemäßen reißverschlußähnlichen Zahnverschluß nach dem Öffnen auch irreversibel verschließen, indem man entweder nur an die Frontseiten der Zähne oder aber auch von oben an die Seitenflächen der Zähne Klebstoff, insbesondere einen Kontakt Kleber, aufbringt.

## Patentansprüche

1. Schaumstoffisolierrohr aus flexiblem Schaumkunststoff mit einem in Richtung der Rohrlängsachse zu öffnenden ineinander greifenden Verschlußsystem, dadurch gekennzeichnet, daß das Verschlußsystem ein reißverschlußähnlich ineinander greifender Zahnverschluß (2) ist.

2. Schaumstoffisolierrohr nach Anspruch 1, dadurch gekennzeichnet, daß die ineinandergreifenden Zähne, (3, 3a) abgerundete Hinterschneidungen aufweisen.

3. Schaumstoffisolierrohr nach Anspruch 1, dadurch gekennzeichnet, daß die ineinandergreifenden Zähne (3, 3a) eckige Hinterschneidungen aufweisen.

4. Schaumstoffisolierrohr nach einem der Ansprüche 1 bis 3, dadurch gekennzeichnet, daß die ineinandergreifenden Zähne mittels eines gesteuerten Laserstrahls in den Rohrmantel eingeschnitten sind.

## Revendications

1. Tube isolant en mousse fabriqué en matière plastique flexible avec un système de fermeture à interpénétration s'ouvrant en direction de l'axe longitudinal du tube, caractérisé en ce que le système de fermeture est une fermeture à dents (2) s'interpénétrant, du type fermeture éclair.

2. Tube isolant en mousse selon la revendication 1, caractérisé en ce que les dents (3, 3a) s'interpénétrant présentent des contre-dépouilles arrondies.

3. Tube isolant en mousse selon la revendication 1, caractérisé en ce que les dents (3, 3a) s'interpénétrant présentent des contre-dépouilles polygonales.

4. Tube isolant en mousse selon l'une des revendications 1 à 3, caractérisé en ce que les dents s'interpénétrant sont découpées dans l'enveloppe au moyen d'un rayon laser commandé.

## Claims

1. An insulating foam tube consisting of flexible synthetic resin foam and comprising an interlocking closure system capable of being opened along the longitudinal tube axis, characterized in that the closure system is a zipper-like interlocking dented closure (2).

2. Insulating foam tube according to claim 1, characterized in that the interlocking teeth (3, 3a) are provided with rounded undercutting.

3. Insulating foam tube according to one of claims 1 to 3, characterized in that the interlocking teeth (3, 3a) are provided with angular undercutting.

4. Insulating foam tube according to one of claims 1 to 3, characterized in that the interlocking teeth are cut into the tube jacket by means of a guided laser beam.

Fig.1

Fig. 2

Fig. 3